# EUROPÄISCHE PATENTANMELDUNG

(11) **EP 2 249 276 A1**
(43) Veröffentlichungstag der Anmeldung: **10.11.2010**
(21) Anmeldenummer: 10160826.3
(22) Anmeldetag: 23.04.2010
(51) Int. Cl.: G06F 21/00

(54) **Verfahren und Anordnung zur Zugriffskontrolle auf ein Speichermedium sowie ein derartiges Speichermedium**

(30) Priorität: 28.04.2009 DE 102009018941
(71) Anmelder: JENOPTIK Robot GmbH, 40789 Monheim am Rhein (DE)
(72) Erfinder: Küster, Hans-Holger, 31061 Alfeld (DE); Heiner, Andreas, 38729 Lutter (DE); Schätzlein, Thomas, 31137 Hildesheim (DE)
(74) Vertreter: Schaller, Renate

(57) **Zusammenfassung**

Offenbart ist ein Verfahren und eine Anordnung (1) zur Herstellung und Zugriffskontrolle auf ein verschlüsseltes Dateisystem (14) eines Speichermediums, wobei das Speichermedium eine individuelle Kennung aufweist, die mit einem auf dem Speichermedium hinterlegten und dem Dateisystem (14) zugeordneten Schlüssel verglichen wird. Erfindungsgemäß wird aus der Kennung des Speichermediums und einer Referenz auf einen Schlüssel einer Schlüsselgruppe (10) ein Teilschlüssel gebildet, wobei der Zugriff auf das Dateisystem (14) erlaubt wird, wenn Kennungen mit korrekter Relation zueinander vorliegen und der referenzierte Schlüssel vorhanden ist. Des Weiteren ist ein Speichermedium gemäß einem derartigen Verfahren offenbart.

## Beschreibung

Die Erfindung betrifft ein Verfahren und eine Anordnung zur Herstellung und Zugriffskontrolle auf ein verschlüsseltes Dateisystem eines Speichermediums, wobei das Speichermedium eine individuelle Kennung aufweist, die mit einem auf dem Speichermedium hinterlegten und dem Dateisystem zugeordneten Schlüssel verglichen wird. Des Weiteren betrifft die Erfindung ein gemäß einem derartigen Verfahren hergestelltes Speichermedium.

Ein derartiges Verfahren zur Herstellung und Zugriffskontrolle eines Datenspeichermediums ist beispielsweise aus der US 6,446,177 B1 bekannt. Bei dieser Lösung wird ein Speichersystem mit einem insbesondere als Flash-Speicherkarte ausgebildeten Speicherelement verwendet, das eine individuelle, eindeutige Identifikationsinformation (Kennung) aufweist. Die individuelle Kennung wird mit einer auf dem Speicherelement hinterlegten Kennung verglichen, wobei der Zugriff eines Benutzers auf das Dateisystem des Speicherelements bei übereinstimmenden Kennungen erlaubt und bei unterschiedlichen Kennungen verweigert wird. Die hinterlegte Kennung kann beispielsweise die Seriennummer des Speicherelements enthalten und verschlüsselt in dem Speicherelement abgelegt sein.

Nachteilig bei einem derartigen Speichersystem ist, dass eine unberechtigte Vervielfältigung der Speichermedien nicht ausreichend verhindert ist, da die Kennung des Speichermediums als Schlüssel zum Auslesen der verschlüsselten Daten des Dateisystems dient.

Demgegenüber liegt der Erfindung die Aufgabe zugrunde, eine verbesserte Zugriffskontrolle auf das Dateisystem eines Datenspeichermediums bereitzustellen, so dass insbesondere ein lesbarer Zugriff auf die geschützten Daten und somit eine unberechtigte Vervielfältigung auf andere Speichermedien verhindert ist.

Diese Aufgabe wird durch ein Verfahren zur Zugriffskontrolle mit den Merkmalen des Patentanspruches 1, ein Speichermedium mit der Merkmalskombination des Patentanspruches 12 und eine Anordnung zur Durchführung des Verfahrens gemäß Patentanspruch 16 gelöst.

Bei einem erfindungsgemäßen Verfahren zur Herstellung und Zugriffskontrolle auf ein verschlüsseltes Dateisystem eines Speichermediums, wird eine individuelle, eindeutige Kennung des Speichermediums mit einem auf dem Speichermedium hinterlegten und dem Dateisystem zugeordneten Schlüssel verglichen. Erfindungsgemäß wird aus der Kennung des Speichermediums und einer Referenz auf einen Schlüssel einer hinterlegten Schlüsselgruppe ein Teilschlüssel gebildet, wobei der lesbare Zugriff auf das Dateisystem erlaubt wird, wenn Kennungen mit korrekter Relation zueinander vorliegen und der referenzierte Schlüssel vorhanden ist. Bei Kennungen mit nicht korrekter Relation zueinander wird der lesbare Zugriff entsprechend verweigert. Dadurch wird eine unberechtigte und lesbare Vervielfältigung der Daten auf ein anderes Speichermedium mit einer von der ursprünglichen Kennung abweichenden Kennung verhindert, so dass Speichermedien nicht unbeschränkt lesbar vervielfältigbar sind. Mit anderen Worten, nach einer unberechtigten Vervielfältigung der Daten auf ein anderes Speichermedium sind die Daten, trotz Einsatz des Schlüssels, nicht lesbar. Nicht lesbar soll heißen, dass eine sinnvolle Information, die z.B. der ursprünglich gespeicherten Information entspricht, nicht entschlüsselt werden kann. Ferner wird der lesbare Zugriff verweigert, wenn der referenzierte Schlüssel der Schlüsselgruppe nicht vorliegt, so dass die Zugriffskontrolle auf das Dateisystem eines Datenspeichermediums wesentlich verbessert ist. Unter einer Relation der Kennungen wird im Rahmen der Erfindung neben einer Übereinstimmung insbesondere auch ein definiertes Verhältnis der Kennungen zueinander, wie beispielsweise eine Relation einer Zahlenfolge 123 zu einer Buchstabenfolge ABC, verstanden.

Die Kennung des Speichermediums kann bei einem Dateizugriff verwendet werden, um den Nachweis zu führen, dass die Daten originär zu dem Speichermedium gehören. Aus gespeicherten Daten kann ferner mittels der Kennung rekonstruiert werden, auf welches Exemplar von Speichermedium die Daten originär geschrieben wurden.

Gemäß einem besonders bevorzugten Ausführungsbeispiel der Erfindung ist als Kennung des Speichermediums zumindest ein Teil einer eindeutigen Seriennummer (unique serial number) des Speichermediums vorgesehen. Die Seriennummer kann verdrahtet und hardwaregebunden in dem Speichermedium festgelegt sein. Alternativ oder zusätzlich kann dem Speichermedium eine softwarebasierte Seriennummer zugeordnet sein. Die Erfindung macht sich hierbei zunutze, dass Speichermedien vielfach eine individuelle Kennung oder Seriennummer aufweisen, welche einem Dateisystem, vorzugsweise verschlüsselt, zugeordnet werden kann. Durch einen Abgleich, ob die individuelle Seriennummer in dem Dateisystem hinterlegt ist oder nicht, kann der Zugriff bei abweichenden Seriennummern verweigert oder bei übereinstimmenden Seriennummern erlaubt werden. Dadurch ist neben einem Kopierschutz ein wirksamer Zugangsschutz zu dem Speichermedium ermöglicht.

Das Speichermedium weist bei einem bevorzugten Ausführungsbeispiel der Erfindung zwei oder mehr Partitionen auf, wobei die Kennung des verschlüsselten Dateisystems auf einer Partition mit einem unverschlüsselten Dateisystem abgelegt ist.

Als besonders vorteilhaft hat es sich erwiesen, wenn der Teilschlüssel mit einem persönlichen Schlüssel signiert wird. Vorzugsweise erfolgt die Signatur mittels eines asymmetrischen Kryptosystems, beispielsweise basierend auf RSA-2048.

Der signierte Schlüssel wird bei einem bevorzugten Verfahren auf dem Speichermedium abgelegt. Vorzugsweise wird die signierte Kennung bei dieser Variante verschlüsselt mit den Daten gespeichert.

Als Schlüssel für den Zugriff auf das verschlüsselte Dateisystem kann alternativ oder zusätzlich eine Hash-Funktion der Kennung verwendet werden.

Erfindungsgemäß wird es besonders bevorzugt, wenn das verschlüsselte Dateisystem basierend auf dem signierten Teilschlüssel auf dem Speichermedium erstellt wird. Das Dateisystem kann beispielsweise mit einer AES-256 Verschlüsselung geschützt sein.

Zusätzlich kann als Kennung des Speichermediums zumindest eine optische Codierung, insbesondere ein 1D, 2D oder 3D-Barcode, vorgesehen sein. Die optische Codierung des Speichermediums, wie beispielsweise ein auf dem Speichermedium angeordneter Barcode, kann mittels einer Secure Media Access-Station (SMAS) ausgelesen und mit der hinterlegten Kennung zur Zugriffskontrolle verglichen werden.

Ein erfindungsgemäßes Speichermedium mit einem verschlüsselten Dateisystem weist eine individuelle Kennung auf, die mit einem auf dem Speichermedium hinterlegten und dem Dateisystem zugeordneten Schlüssel vergleichbar ist. Auf dem Speichermedium ist ein Teilschlüssel gespeichert, der die Kennung des Speichermediums und eine Referenz auf einen Schlüssel einer Schlüsselgruppe enthält, wobei der Zugriff auf das Dateisystem erlaubt wird, wenn Kennungen mit korrekter Relation zueinander vorliegen sowie der referenzierte Schlüssel der Schlüsselgruppe vorhanden ist.

Als Speichermedien können Speicherkarten, insbesondere Flash- oder Memory Cards, eine Prozessorchipkarte, beispielsweise Smartcard oder Integrated Circuit Card (ICC), eine Subscriber Identity Module-Karte (SIM-Karten), oder ein USB-Speichermedium verwendet werden.

Eine Anordnung zur Durchführung des Verfahrens ist beispielsweise als Secure Media Access-Station (SMAS) ausgeführt, die einen geprüften Zugriff auf das Dateisystem eines SMAS-Speichermediums ermöglicht. Eine Secure Media Access-Station kann derart ausgeführt sein, dass diese die Herstellung von SMAS-Speichermedien, den sogenannten Sicherheitsmedien, erlaubt. Das erfindungsgemäße Verfahren kann beispielsweise bei Messgeräten mit SMAS-Unterstützung Verwendung finden.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
- Figur 1: ein Blockschaltbild eines erfindungsgemäßen Verfahrens zur Herstellung und Zugriffskontrolle auf ein verschlüsseltes Dateisystem eines Speichermediums;
- Figur 2: die Herstellung eines erfindungsgemäßen Sicherheitsmediums anhand eines Blockschaltbildes und
- Figur 3: ein Verfahren zum Auslesen des Speichermediums aus Figur 2 anhand eines Blockschaltbildes.

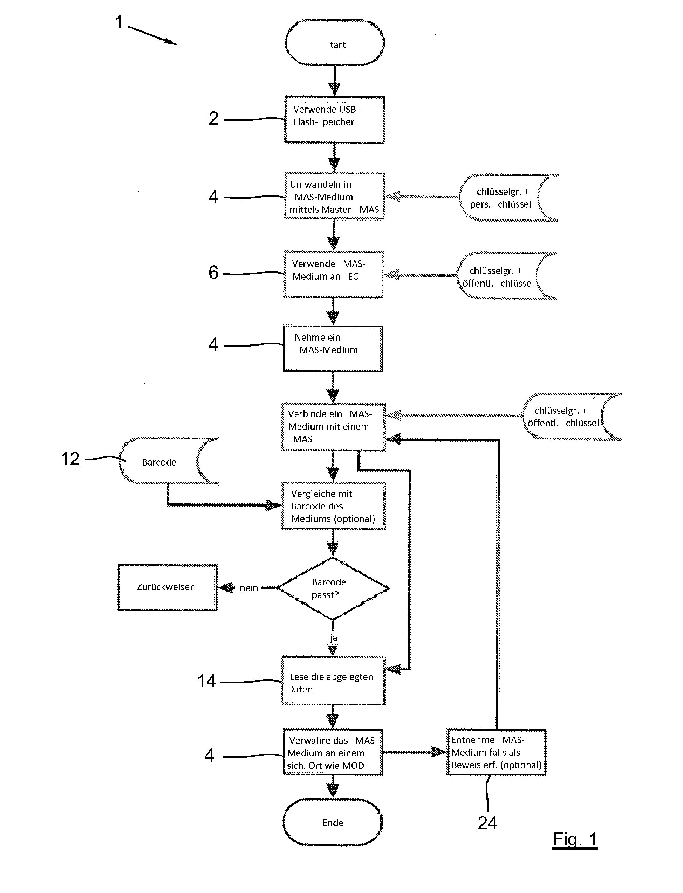

Figur 1 zeigt ein Blockschaltbild eines erfindungsgemäßen Verfahrens zur Herstellung und Zugriffskontrolle eines verschlüsselten Dateisystems mittels einer Secure Media Access-Station (SMAS) 1. In einem ersten Schritt wird ein Speichermedium 2, beispielsweise ein USB-Flash-Speichermedium vorgesehen, das als Speichermedium für die Secure Media Access-Station 1 verwendbar ist.

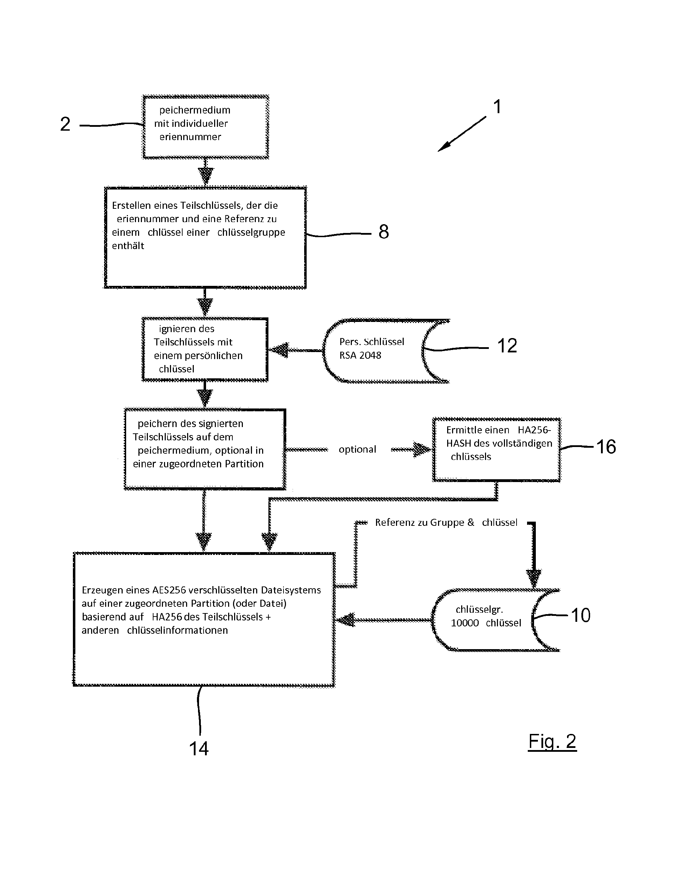

Das Speichermedium 2 wird anschließend mittels der als Master-Station (Master-SMAS) ausgebildeten Secure Media Access-Station 1 in ein Sicherheitsmedium 4 (SMAS-Medium) umgewandelt und kann anschließend an einer Sicherheitseinrichtung (SEC) 6 verwendet werden. Die Umwandlung eines Speichermediums 2 in ein Sicherheitsmedium 4 wird im Folgenden anhand Figur 2 näher erläutert, die ein Blockschaltbild eines Verfahrens zur Herstellung des Sicherheitsmediums 4 zeigt.

Gemäß Figur 2 wird ein Speichermedium 2 mit einer individuellen, eindeutigen Kennung bereitgestellt. Bei dem dargestellten Ausführungsbeispiel der Erfindung ist als Kennung des Speichermediums 2 die eineindeutige Seriennummer des Speichermediums 2 vorgesehen. Die Seriennummer kann verdrahtet und hardwaregebunden in dem Speichermedium 2 festgelegt sein. Alternativ oder zusätzlich kann dem Speichermedium 2 eine softwarebasierte Seriennummer zugeordnet sein. In einem weiteren Schritt (Block 8) wird aus der Seriennummer und einer Referenz auf einen Schlüssel einer Schlüsselgruppe (key ring) 10 ein Teilschlüssel ausgebildet. Die Schlüsselgruppe 10 kann beispielsweise 10.000 Schlüssel aufweisen. Anschließend wird der Teilschlüssel mit einem persönlichen Schlüssel 12 signiert, wobei die Signatur vorzugsweise mittels eines asymmetrischen Kryptosystems, beispielsweise basierend auf RSA-2048, erfolgt. Der Teilschlüssel wird auf dem Speichermedium 2 abgelegt. Hierzu kann dem Teilschlüssel eine Partition des Speichermediums 2 zugewiesen werden.

In einem weiteren Schritt wird basierend auf dem SHA-256 Teilschlüssel ein symmetrisch verschlüsseltes Dateisystem (AES-256) 14 auf dem Speichermedium 2 erzeugt. Das verschlüsselte Dateisystem 14 kann in einer dafür vorgesehenen Partition des Speichermediums 2 oder einer Datei ausgebildet werden. Die weiteren Informationen zu den Schlüsseln der Schlüsselgruppe 10 sind vorzugsweise in der Vorrichtung, aber außerhalb des Speichermediums 2 abgelegt. Optional kann als Schlüssel für den Zugriff auf das verschlüsselte Dateisystem 14 eine Hash-Funktion 16 der Kennung verwendet werden. Bei dem dargestellten Ausführungsbeispiel wird ein SHA-256 (Hash-Algorithmus) zur Verschlüsselung angewendet.

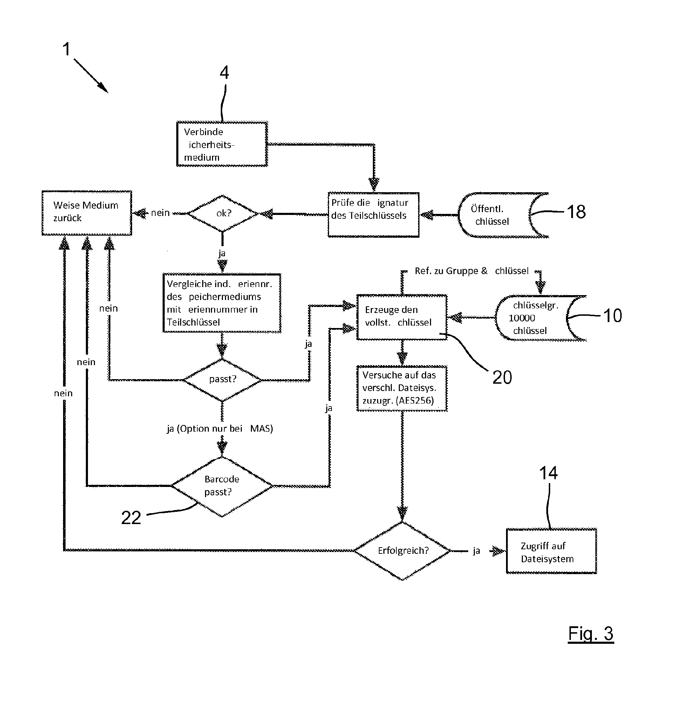

Figur 3 zeigt ein Verfahren zum Auslesen eines Sicherheitsmediums 4 mittels der Secure Media Access-Station 1. Der SMAS 1 ist hierzu eine Software zugeordnet, die ein Auslesen der verschlüsselten Daten ermöglicht. In einem ersten Schritt wird ein Sicherheitsmedium 4 mit der SMAS 1 verbunden (siehe auch Figur 1). Der Signatur-Chiffre des Teilschlüssels des Sicherheitsmediums 4 wird mittels eines öffentlichen Schlüssels 18 verifiziert. Ist die Bestätigung der Signatur nicht erfolgreich, kann das Sicherheitsmedium 4 nicht akzeptiert werden und wird zurückgewiesen. Bei einer erfolgreichen Verifikation der Signatur wird die individuelle Kennung des Speichermediums 2 mit einer auf dem Speichermedium 2 hinterlegten und dem Dateisystem 14 zugeordneten Kennung verglichen. Bei Kennungen mit nicht korrekter Relation zueinander wird der Zugriff verweigert und das Sicherheitsmedium 4 nicht akzeptiert. Dadurch wird eine unberechtigte Vervielfältigung der Daten auf ein Speichermedium 2 mit einer von der ursprünglichen Kennung abweichenden Kennung verhindert, so dass die Sicherheitsmedien 4 nicht vervielfältigbar sind. Verschlüsselte Daten sind nur auf dem Speichermedium 2 wieder lesbar, auf dem sie ursprünglich unverschlüsselt geschrieben und dann zum Sicherheitsmedium 4 verschlüsselt wurden, d. h. eine erstellte Binärkopie ist auf einem anderen Speichermedium nicht lesbar. Liegen Kennungen mit korrekter Relation zueinander vor, wird in einem weiteren Schritt der vollständige Schlüssel 20 ausgebildet. Hierzu ist als zusätzliche Sicherheitsanforderung der referenzierte Teilschlüssel aus der Schlüsselgruppe 10 erforderlich. Mit dem vollständigen Schlüssel 20 wird das Dateisystem 14 entschlüsselt. Ist die Entschlüsselung erfolgreich, wird Zugriff auf das Dateisystem 14 gewährt.

Zusätzlich kann als Kennung des Sicherheitsmediums 4 ein Barcode 22 vorgesehen sein. Die optische Codierung des Speichermediums 2, wie beispielsweise ein auf dem Speichermedium 2 angeordneter Barcode 22, kann mittels der Secure Media Access-Station 1 ausgelesen und mit der hinterlegten Kennung zur Zugriffskontrolle verglichen werden.

Wie Figur 1 zu entnehmen ist, kann das Sicherheitsmedium 4 anschließend sicher, beispielsweise auf einem magnetooptischen Speichermedium (Magneto Optical Disk MOD), d.h. auf einem Speichermedium, das magnetisch beschrieben und optisch ausgelesen wird, aufbewahrt werden. Das Sicherheitsmedium 4 kann archiviert werden und als rechtliches Beweismittel, beispielsweise für ein Gerichtsverfahren dienen (vgl. Block 24). Die Kennung kann bei einem Dateizugriff verwendet werden, um den Nachweis zu führen, dass die Daten originär zu dem Speichermedium 2 gehören. Aus gespeicherten Daten kann ferner mittels der Kennung rekonstruiert werden, auf welches Exemplar von Speichermedium 2 die Daten originär geschrieben wurden.

Offenbart ist ein Verfahren und eine Anordnung 1 zur Herstellung und Zugriffskontrolle auf ein verschlüsseltes Dateisystem 14 eines Sicherheitsmediums 4, wobei das Sicherheitsmedium 4 eine individuelle Kennung aufweist, die mit einem auf dem Sicherheitsmedium 4 hinterlegten und dem Dateisystem 14 zugeordneten Schlüssel verglichen wird. Erfindungsgemäß wird aus der Kennung des Sicherheitsmediums 4 und einer Referenz auf einen Schlüssel einer Schlüsselgruppe 10 ein Teilschlüssel gebildet, wobei der Zugriff auf das Dateisystem 14 erlaubt wird, wenn Kennungen mit korrekter Relation zueinander vorliegen und der referenzierte Schlüssel vorhanden ist. Des Weiteren betrifft die Erfindung ein Sicherheitsmedium 4 gemäß einem derartigen Verfahren.

### Bezugszeichenliste

- 1: Secure Media Access-Station (SMAS)
- 2: Speichermedium
- 4: SMAS-Speichermedium
- 6: Sicherheitseinrichtung (SEC)
- 8: Block
- 10: Schlüsselgruppe
- 12: Persönlicher Schlüssel
- 14: Dateisystem
- 16: Hash-Funktion
- 18: öffentlicher Schlüssel
- 20: Schlüssel
- 22: Barcode
- 24: Block

## Patentansprüche

1. Verfahren zur Herstellung und Zugriffskontrolle auf ein verschlüsseltes Dateisystem (14) eines Speichermediums, wobei das Speichermedium eine individuelle Kennung aufweist, die mit einem auf dem Speichermedium hinterlegten und dem Dateisystem (14) zugeordneten Schlüssel verglichen wird, **dadurch gekennzeichnet,**
**dass** aus der Kennung des Speichermediums und einer Referenz auf einen Schlüssel einer Schlüsselgruppe (10) ein Teilschlüssel gebildet wird, wobei der Zugriff auf das Dateisystem (14) erlaubt wird, wenn Kennungen mit korrekter Relation zueinander vorliegen und der referenzierte Schlüssel vorhanden ist.

2. Verfahren nach Anspruch 1, **dadurch gekennzeichnet,**
**dass** als Kennung des Speichermediums zumindest ein Teil einer eineindeutigen Seriennummer des Speichermediums vorgesehen wird.

3. Verfahren nach Anspruch 1 oder 2, **dadurch gekennzeichnet,**
**dass** das Speichermedium zumindest zwei Partitionen aufweist, wobei die Kennung des verschlüsselten Dateisystems (14) auf einer unverschlüsselten Partition abgelegt wird.

4. Verfahren nach einem der vorhergehenden Ansprüche, **dadurch gekennzeichnet,**
**dass** der Teilschlüssel mit einem persönlichen Schlüssel (12) signiert wird.

5. Verfahren nach Anspruch 4, **dadurch gekennzeichnet,**
**dass** die Signatur mittels eines asymmetrischen Kryptosystems erfolgt.

6. Verfahren nach Anspruch 4 oder 5, **dadurch gekennzeichnet,**
**dass** der signierte Schlüssel auf dem Speichermedium abgelegt wird.

7. Verfahren nach einem der vorhergehenden Ansprüche, **dadurch gekennzeichnet,**
**dass** eine Hash-Funktion (16) der Kennung als Schlüssel für den Zugriff auf das verschlüsselte Dateisystem (14) verwendet wird.

8. Verfahren nach einem der vorhergehenden Ansprüche, **dadurch gekennzeichnet,**
**dass** das verschlüsselte Dateisystem (14) basierend auf dem signierten Teilschlüssel auf dem Speichermedium erstellt wird.

9. Verfahren nach einem der vorhergehenden Ansprüche, **dadurch gekennzeichnet,**
**dass** die Kennung bei einem Dateizugriff verwendet wird, um den Nachweis zu führen, dass die Daten originär zu dem Speichermedium gehören.

10. Verfahren nach einem der vorhergehenden Ansprüche, **dadurch gekennzeichnet,**
**dass** aus gespeicherten Daten mittels der Kennung rekonstruiert wird, auf welches Exemplar von Speichermedium die Daten originär geschrieben wurden.

11. Verfahren nach einem der vorhergehenden Ansprüche, **dadurch gekennzeichnet,**
**dass** als Kennung des Speichermediums zumindest eine optische Codierung, insbesondere ein Barcode (22), vorgesehen ist.

12. Speichermedium mit einem verschlüsselten Dateisystem (14), wobei das Speichermedium eine individuelle Kennung aufweist, die mit einem auf dem Speichermedium hinterlegten und dem Dateisystem (14) zugeordneten Schlüssel vergleichbar ist, **gekennzeichnet durch** einen Teilschlüssel, der die Kennung des Speichermediums und eine Referenz auf einen Schlüssel einer Schlüsselgruppe (10) aufweist, wobei der Zugriff auf das Dateisystem (14) erlaubt wird, wenn Kennungen mit korrekter Relation zueinander vorliegen und der referenzierte Schlüssel vorhanden ist.

13. Speichermedium nach Anspruch 12, **dadurch gekennzeichnet,**
**dass** die Kennung des Speichermediums zumindest einen Teil einer eineindeutigen Seriennummer des Speichermediums aufweist.

14. Speichermedium nach Anspruch 12 oder 13, **dadurch gekennzeichnet, dass** die Kennung des Speichermediums zumindest eine optische Codierung, insbesondere einen Barcode (22), aufweist.

15. Speichermedium nach einem der Ansprüche 12 bis 14, **gekennzeichnet durch** eine Speicherkarte, ein USB-Speichermedium, eine Prozessorchipkarte oder eine Subscriber Identity Module-Karte.

16. Anordnung zur Durchführung des Verfahrens gemäß einem der Ansprüche 1 bis 11, mit einer Secure Media Access-Station (SMAS) (1).

17. Anordnung nach Anspruch 16, **gekennzeichnet durch** zumindest eine Barcode-Leseeinrichtung (1).
